# EUROPEAN PATENT SPECIFICATION

(11) **EP 4 198 567 B1**
(45) Date of publication and mention of the grant of the patent: **08.01.2025**
(21) Application number: 21216059.2
(22) Date of filing: 20.12.2021
(51) Int. Cl.: G01S 17/00, G01S 17/04, G01S 17/89, G06N 3/08, G06N 5/00, G06N 7/00, G01S 17/42, G06N 3/084, G01S 7/497

(54) **METHOD FOR DETERMINING A BEAM CONFIGURATION OF A LIDAR SYSTEM**
VERFAHREN ZUR BESTIMMUNG DER STRAHLKONFIGURATION EINES LIDAR-SYSTEMS
PROCÉDÉ POUR DÉTERMINER UNE CONFIGURATION DE FAISCEAU D'UN SYSTÈME LIDAR

(43) Date of publication of application: 21.06.2023
(73) Proprietor: TOYOTA JIDOSHA KABUSHIKI KAISHA, Toyota-shi, Aichi-ken, 471-8571 (JP); ETH Zurich - The Swiss Federal Institute of Technology Zurich, 8092 Zurich (CH)
(72) Inventor: ABBELOOS, Wim, 1140 Brussels (BE); VÖDISCH, Niclas, 8092 Zürich (CH); UNAL, Ozan, 8092 Zürich (CH); LI, Ke, 8092 Zürich (CH); VAN GOOL, Luc, 8092 Zürich (CH); DAI, Dengxin, 8092 Zürich (CH)
(74) Representative: Cabinet Beau de Loménie

(56) References cited:
- US-A1- 2020 257 000
- BERENS FELIX ET AL: "Genetic Algorithm for the Optimal LiDAR Sensor Configuration on a Vehicle", IEEE SENSORS JOURNAL, IEEE, USA, vol. 22, no. 3, 17 December 2021 (2021-12-17), pages 2735 - 2743, XP011899496, ISSN: 1530-437X, [retrieved on 20220128], DOI: 10.1109/JSEN.2021.3136362

## Description

### Backaround of the disclosure

The present disclosure is in the field of robotic perception and localization by optical systems. More particularly, it relates to a method for determining an optimal beam configuration of a LiDAR system for performing a given task.

A LiDAR system (also known as a laser remote sensing system) emits laser or light beams and analyzes the received beams, in particular the beams emitted by the LiDAR system and then reflected by surrounding objects. The system then determines the positions of objects from which the beams have been reflected. Conventionally, each position is represented as a point. Sets of these points, called point clouds, provide precise three-dimensional information about these objects, i.e., about the environment of the LiDAR system.

LiDAR systems are therefore key elements in the design of autonomous vehicles and are used in robotics. In such applications, the tasks performed by these LiDAR systems include three-dimensional object detection, depth estimation, and map-based object localization.

The more beams a LiDAR system has, i.e. the higher its resolution, the denser the point clouds collected by this system and the more precise the information about the environment. However, a high-resolution LiDAR system is expensive. Many uses of LiDAR systems require lower resolution, less expensive LiDAR systems.

In the prior art, improvements in the performance of low-resolution LiDAR systems have focused on methods for analysing the point clouds detected by these systems. For example, a camera is used in order to complement the low-resolution LiDAR system in object detection or depth estimation [references: "Parse geometry from a line: Monocular depth estimation with partial laser observation", by Y.Liao et al, arXiv:1611.02174, 2016; "3D vehicle detection using camera and low-resolution LiDAR", by L. Bai et al, arXiv:2105.01765, 2021]. In another example, artificial neural networks are leveraged for completing the point clouds collected by a low-resolution LiDAR system [reference: "Deep adaptive LiDAR: End-to-end optimization of sampling and depth completion at low sampling rates", by A. W. Bergman et al, 2020 IEEE International Conference on Computational Photography (ICCP), 2020, pp. 1-11]. The US patent application US 2020/257000 A1 discloses an adjustable LiDAR sensor and a control system configured to receive feedback data from a vehicle and dynamically adjust the Lidar system accordingly. The paper "Genetic Algorithm for the Optimal LiDAR Sensor Configuration on a Vehicle" (Berens Felix et al, IEEE Sensors Journal) discloses a method for determining optimal configurations of LiDAR sensors based on a genetic algorithm.

However, improving such LiDAR systems analysis methods alone is not enough to detect objects or to localize a robot satisfactorily.

The invention aims to overcome these drawbacks.

### Purpose and summary of the disclosure

Thus, and according to a first aspect, the invention relates to a method for determining an optimal configuration of the beams of a LiDAR system intended to perform a specific task, according to independent claim 1.

Correspondingly, the invention also proposes a device for determining an optimal configuration of the beams of a LiDAR system intended to perform a specific task, according to independent claim 17.

Thus, and in general, the invention provides a method for determining an optimal beam configuration of a given LiDAR system to perform a specific task in an optimal manner.

To this end, the invention proposes to consider a reduced number of possible configurations of the beams of a reconfigurable LiDAR system to determine the configuration that achieves the best performance to perform a specific task.

For example, when a specific first task requires, for good performance, the detection of objects at specific first positions in the environment of the LiDAR system (without these positions necessarily being known), a use of the invention allows to find, thanks to the exploration step, a first optimal configuration of the beams to detect objects at these specific first positions.

When a second specific task requires, for good performance, the detection of objects at other specific positions in the environment of the LiDAR system, one use of the invention allows to find, through the exploration step, a second optimal configuration (possibly identical to the first one) of the beams to detect objects at these other positions.

Instead, the prior art does not provide an effective solution for determining the configuration of a LiDAR system suitable for detecting objects at specific given positions (first positions, second positions, ...) in the LiDAR system environment.

This impossibility of adapting the configuration of the LiDAR system is all the more penalizing since this system is of low resolution, a relatively limited number of beams (for example 4 instead of 128) allowing the system to scan only a relatively small portion of its environment.

The invention therefore allows, by optimizing the beam configuration, to increase the performance of a LiDAR system of a given resolution in performing a specific task.

In particular, it allows to reduce the number of beams needed to obtain a given performance on a specific task and therefore to consider less expensive, less bulky and therefore easier to integrate LiDAR systems.

The invention thus proposes to determine, for a specific task, a configuration in which the LiDAR system has a better actual performance with respect to the outcome of the execution of that specific task.

According to the invention, a specific task corresponds to a particular action or series of actions that the LiDAR system must perform in order to achieve a particular objective, such as object detection. For the sake of brevity, we will use the term "specific task" both to designate the action or series of actions to be performed and to designate the objective that this action or series of actions allows to achieve.

According to the invention, the term "actual performance" refers to a performance of the LiDAR system obtained as a result of performing a specific task. Obtaining this actual performance therefore requires the execution of the task, either in real conditions or by simulation.

According to the invention, the term "predicted performance" of a configuration refers to a performance obtained without executing the specific task (neither in real condition, nor by simulation). The predicted performance is obtained by a prediction function, for example from the values of the configuration, or in another example, from values representative of the state of the LiDAR system when it is configured according to this configuration.

For example, a beam configuration may be the set of values for the angles that each beam emitted by the LiDAR system forms with an axis of that system. In another example, a configuration comprises, for each beam of the LiDAR system, a value indicating whether that beam is emitted or extinguished.

In this application, the terms "configuration" of a LiDAR system and "beam configuration" of that LiDAR system, have the same meaning, and are therefore used equivalently.

Note that a LiDAR system is not necessarily used alone to perform a specific task. It can be used in a pipeline to execute that specific task. For example, in the case of three-dimensional object detection, the points collected by the LiDAR system can be used to correct a depth map of the surrounding space obtained with a stereo camera.

In this example, the corrected depth map can be analyzed by a three-dimensional object detection algorithm. The actual performance associated with a configuration of the LiDAR system may correspond in this case to the accuracy of object detection by this algorithm. Indeed, this accuracy depends on the quality of the corrected depth map and therefore on the configuration of the LiDAR system that allowed the correction of this map.

The invention thus allows, in a particular embodiment, and in an advantageous way, to adapt the LiDAR system to a specific task, requiring only
- the definition of an actual performance to quantify the quality of execution of the task by the LiDAR system, and
- the possibility of executing the specific task with the LiDAR system under different configurations.

Note that the execution of a specific task is not necessarily performed in real conditions.

Thus, according to one embodiment of the determination method, the execution of the specific task by the LiDAR system is computer simulated.

In the sense of the invention, the simulation of the execution of the specific task by the LiDAR system means that a representation of this LiDAR system is used to simulate the execution of the specific task. This representation can be virtual, corresponding for example to a digital model of the LiDAR system and its interactions with its environment, or correspond to data previously obtained from another LiDAR system.

This embodiment of the invention has the particular advantage of allowing the determination of an optimal configuration of a LiDAR system with less time and cost, since this implementation does not require the deployment of this LiDAR system in real conditions.

The method according to the invention is based in particular on an exploration step, carried out in one or more iterations until a stopping criterion is satisfied. At each iteration, a new configuration of the LiDAR system is tested: the specific task is executed by the LiDAR system configured according to this new configuration, and the actual performance associated with this configuration is obtained from the result of this execution.

This exploration step leads to the determination of the optimal configuration by selecting the tested configuration with the best associated actual performance.

As each execution of the task by the LiDAR system is generally time consuming (even in a case where this execution is computer simulated), the number of new configurations tested cannot be too high. Thus, the invention proposes a sample efficient exploration step, i.e. one that can be done in a reduced number of iterations.

To this end, the invention proposes, during a first selection sub-step of the exploration step, to select a new configuration according to an exploration strategy, and using a so-called initial prediction function.

On the one hand, the initial prediction function calculates a predicted performance of the new configuration, i.e. a prediction of the actual performance associated with this new configuration. In other words, the prediction function estimates the actual performance associated with the new configuration without the specific task of the LiDAR system configured according to this new configuration being executed.

On the other hand, the exploration strategy indicates the new configuration to be selected by favoring the selection of a configuration with the best predicted performance among potential configurations. In other words, with the exploration strategy, the potential configuration with the best predicted performance has a better chance than the other potential configurations to be selected as the new configuration.

If the new configuration thus selected has not already been selected in a previous iteration of the exploration step, this new configuration is tested, and added, with its associated actual performance thus obtained, to an initial history. A new history is thus obtained, i.e. an updated version of the initial history, which will be used as the initial history in a next iteration, if any, of the exploration step.

In one embodiment of the invention, if conversely this new configuration has already been selected in a previous iteration of the exploration step, the current iteration of the exploration step is stopped. This avoids duplicating the initial history and saves time dedicated to evaluating the actual performance of the new configuration.

Thus, in this embodiment of the invention, the substep of selecting the new configuration is followed by:
- the end of the current iteration of the exploration step if and only if the new configuration is included in the initial history,
- the end of the exploration step if the stopping criterion is satisfied; or
- the next iteration of the exploration step otherwise.

After obtaining the new history, a new prediction function is obtained and is used as the initial prediction function of a next iteration, if any, of the exploration step. For this purpose, the initial prediction function is modified in order to compute the predicted performances of configurations included in the new history, and that these predicted performances are as close as possible to the actual performances associated to these configurations.

Thus, the initial function is adapted to the new history and becomes the new function. This results in an initial prediction function at each new iteration of the exploration step that gives better estimates of actual performance.

Therefore, during successive iterations of the exploration step, the new configuration selection sub-step, which uses the exploration strategy and the initial prediction function as mentioned above, promotes the selection of new configurations whose associated actual performance improves.

As a result, the exploration strategy used in the exploration step advantageously determines an optimal configuration by testing only a small proportion of the possible configurations of the LiDAR system.

According to an embodiment of the determination method, the stopping criterion is reaching a predetermined number of iterations of the exploration step.

The inventors observed that a hundred iterations of the exploration step allowed to determine a configuration of the LiDAR system with a significantly better actual performance than the one obtained by testing a hundred randomly chosen configurations.

Thus, the stopping criterion can for example be characterized by reaching 100 iterations of the exploration step.

In another embodiment, the termination criterion may be characterized by a threshold. For example, a threshold corresponding to a target actual performance can be predetermined, so that once a new configuration associated with an actual performance greater than or equal to this threshold is found, the exploration step ends.

Thus, according to one embodiment of the determination method, the stopping criterion is the presence, in the new history, of an actual performance exceeding a threshold.

According to an embodiment of the determination method, a said prediction function is an artificial neural network.

Advantageously, an artificial neural network can be simply adapted to a history.

Thus, in one embodiment of the invention, the initial prediction function is an artificial neural network and the new prediction function is obtained by updating the initial prediction function by a gradient descent algorithm. This algorithm minimizes the error between predicted performance for configurations in the new history and the actual performance associated with those configurations.

According to an embodiment of the determination method:
- the potential configurations are determined by applying potential actions to an initial configuration included in the initial history, and
- the new configuration constitutes the initial configuration for a subsequent iteration of the exploration step.

The so-called potential configurations, from which the new configuration is selected, can be determined from an initial configuration, equal to the new configuration selected in the previous iteration if it exists, or obtained before the exploration step.

Potential actions are used to determine the potential configurations from the initial configuration. The choice of potential actions allows for example to limit the potential configurations to configurations close to the initial configuration. For example, if an initial configuration corresponds to the values of the angles of the LiDAR system beams, the potential actions can correspond to small values of angles to be added to the initial configuration to obtain potential configurations.

Obtaining potential configurations that are closer to the initial configuration may allow for better performance predictions by the prediction function, i.e. obtaining predicted performance that is closer to the actual performance that would be obtained by running the specific task with these configurations.

Indeed, the prediction function is configured to give a good performance prediction of configurations included in the initial history, including the initial configuration. Thus, the closer a potential configuration to the initial configuration, the better the prediction of the performance of this potential configuration by the prediction function.

According to an embodiment of the determination method :
- a probability value ε is set or calculated as a function of a number of iterations of the exploration step having been performed; and
- the exploration strategy indicates to select,
   (i) with a probability equal to ε, the new configuration randomly the potential configurations, or
   (ii) with a probability equal to 1-ε, the new configuration, among the potential configurations, to which the initial prediction function assigns the best predicted performance;

Such an exploration strategy, called "ε-greedy", is advantageous in that it offers a trade-off between exploring as much as possible, i.e., selecting a variety of configurations during successive iterations of the exploration step, and selecting the best configurations, i.e., configurations with better predicted performance.

Note that the exploration strategy within the meaning of the invention is not limited to an "ε-greedy" strategy as described above. In particular, other sample efficient exploration strategies, such as Bayesian optimization can be used.

According to an embodiment of the determination method, the attribution of a said predicted performance to a said configuration of the LiDAR system, by a said prediction function, comprises the steps of:
- obtaining descriptive values of the said configuration;
- calculating by the said initial prediction function, from these descriptive values, the predicted performance of the said configuration.

A prediction function that computes a predicted performance of a configuration of the LiDAR system may take various inputs. These inputs form, for example, a representation of a system state. They may also be representative of the LiDAR system environment in which the specific task is executed.

These inputs, called descriptive values, can comprise additional information than just the values defining the configuration, such as the angles that the LiDAR system's beams form with an axe of this system. Comprising this additional information allows for more accurate performance predictions by the prediction function.

These descriptive values can be predetermined for each possible configuration of the LiDAR system or obtained when a predicted performance is to be calculated.

According to an embodiment of the determination method, the descriptive values of the configuration comprise, for at least one said beam of the LiDAR system configured according to the configuration, at least one value among:
- an average of a number of points obtained during a fixed number of scans by said at least one beam;
- an average of a number of points of a given semantic class obtained during the fixed number of scans by said at least one beam;
- an average of distances between the LiDAR system and the points obtained during the fixed number of scans by said at least one beam;
- a dispersion of distances between the LiDAR system and the points obtained during the fixed number of scans by said at least one beam;
- an average of angles between an axis of the LiDAR system and the points obtained during the fixed number of scans by said at least one beam;
- a difference between said average of angles obtained for said beam and an average of angles obtained for a distinct beam.

On the one hand, these representative values form compact representations of the LiDAR system configurations.

On the other hand, they are sufficiently descriptive. Thus, if two configurations have close descriptive values, they will a priori have close associated actual performances.

Thus, if a prediction function is configured to compute, from the predictive values of configurations of a history, correct predicted performances (*i.e.* close to the actual performances associated with these configurations), then it will be able a priori also to compute a correct predicted performance for a new configuration, if this new configuration has descriptive values close to the descriptive values of at least one of the configurations of the history.

According to an embodiment of the invention, the determination method comprises a step, performed before said exploration step, of obtaining the initial history by randomly selecting at least one configuration of the LiDAR system and obtaining the at least one actual performance associated with this at least one configuration.

According to an embodiment of the determination method:
- the initial history includes at least one configuration of the LiDAR system and its associated actual performance,
and the method comprises:
- a step, performed before said exploration step, of first updating the initial prediction function from the initial history.

Thus, the initial prediction function can be initialized before the exploration step. In other words, the initial prediction function can be configured or updated before the exploration step, so that this function calculates predicted performances of configurations of the initial history as close as possible to the actual performances associated with these same configurations.

This initialization of the initial prediction function allows, in particular, to have better estimates of the performances predicted by the initial prediction function, and thus to improve the selection of the new configuration, in particular during the first iterations of the exploration step.

According to an unclaimed embodiment of the determination method:
- the initial history comprises at least one configuration of the LiDAR system and its associated actual performance
and the method comprises:
- a step, performed before the exploration step, of selecting a first configuration as the configuration of the initial history that has the best associated actual performance., this first configuration constituting the initial configuration during a first iteration of the exploration step.

The fact of starting the exploration step with an initial configuration having the best associated actual performance, among the configurations included in the initial history, allows to decrease the number of iterations of the exploration step.

Indeed, the higher the actual performance of the initial configuration, during the first iteration of the exploration step, the fewer iterations will be performed before selecting a new configuration that is optimal, i.e. that has the best possible associated actual performance.

According to an embodiment of the determination method:
- said specific task is a detection of objects in three dimensions, and
- obtaining an actual performance associated with a said configuration comprises the following steps:
   (i) detecting objects in three dimensions with the LiDAR system configured according to said configuration;
   (ii) calculating a detection score from a result of the detection step i;
   (iii) calculating the actual performance based on said detection score.

According to an embodiment of the determination method:
- said specific task is a localization of objects on a map, and
- obtaining an actual performance associated to a said configuration comprises the following steps:
   (i) localizing objects on a map with the LiDAR system configured according to said configuration;
   (ii) calculating a localization score from a result of the location step i;
   (iii) calculating the actual performance as a function of the localization score.

Once the optimal configuration is achieved, a LiDAR system can be configured to that optimal configuration, including performing the specific task for which that configuration is optimal.

Thus, according to an embodiment of the invention, the determination method includes a step of configuring a LiDAR system according to the optimal configuration.

The invention provides a computer program comprising instructions for performing the steps of the determination method according to any of the above-described embodiments.

It should be noted that the computer programs referred to in this paper may use any programming language, and be in the form of source code, object code, or code intermediate between source code and object code, such as in a partially compiled form, or in any other desirable form.

The invention provides storage medium, readable by computer equipment, of a computer program comprising instructions for executing the steps of the determination method according to one of the embodiments described above.

The storage media referred to in this statement may be any entity or device capable of storing the program and being played by any computer equipment, including a computer.

For example, the medium may include a storage medium, or a magnetic storage medium, such as a hard drive.

Alternatively, the storage media may correspond to a computer integrated circuit in which the program is incorporated, and adapted to execute a method as described above or to be used in the execution of such method.

### Brief description of the figures

Further features and advantages of the present invention will be apparent from the description below, with reference to the attached drawings which illustrate non-limiting embodiments thereof.
[Fig. 1] Figure 1 represents a determination method according to a particular embodiment of the invention.
[Fig. 2] Figure 2 represents an exploration step of the determination method according to a particular embodiment of the invention.
[Fig. 3] Figure 3 shows the execution of two specific tasks within the meaning of the invention.
[Fig. 4] Figure 4 shows a determination device in accordance with a particular embodiment of the invention.
[Fig. 5] Figure 5 represents the hardware architecture of a determination device in accordance with a particular embodiment of the invention.

### Description of particular embodiments of the invention

Several embodiments of the invention will now be described. Generally speaking, and as previously mentioned, the invention provides a method for determining an optimal configuration CLB of the beams b' of a LiDAR system LiD to perform a specific task.

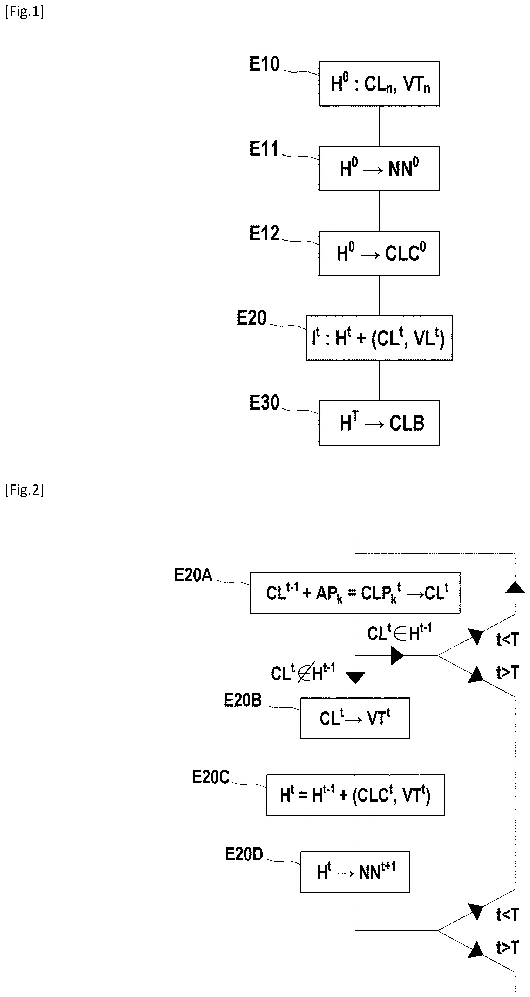

Figure 1 represents the main steps of a method for determining an optimal configuration CLB according to a particular embodiment of the invention.

This method is based on an exploration of the possible beam configurations b' of the LiDAR system LiD. During the exploration step E20, configurations are selected, tested, and then added to a history. Recall that testing a configuration means obtaining actual performance associated with that configuration, and requires the execution of the specific task by the LiDAR system configured according to that configuration.

In the implementation shown in Figure 2, the exploration step E20 has four main substeps E20A, E20B, E20C, and E20D shown in this Figure 2.

In the embodiment shown in Figure 1, the exploration step is preceded by three steps E10, E11 and E12.

In a first step E10 of obtaining an initial history H⁰, possible configurations of the LiDAR system LiD are randomly selected. For example, if the LiDAR system comprises k beams and if a configuration of these beams corresponds to the data of one position among K positions allowed for each of these beams, then each configuration CLₙ is selected at random among the possible *K*!/(*k*! *(K* - k)!) possible configurations in this case.

In this embodiment of the invention, for each configuration CLₙ thus selected, its actual performance VTₙ, is obtained by executing the specific task with the LiDAR system configured according to this configuration CLₙ and calculating the actual performance VTₙ from the result of the execution of the specific task.

Examples of how to perform specific tasks and achieve actual performance will be explained below.

The configurations CLₙ and their associated actual performance VTₙ thus obtained form the initial history H⁰, which is used in the following steps E11 and E12, as well as at the beginning of the exploration step E20.

During the step E11 of first updating an initial prediction function NN⁰, the initial history H⁰ obtained during step E10 is used to update an initial prediction function NN⁰. In particular, this initial prediction function is configured to calculate predicted performances of the configurations included in the initial history H⁰ that are as close as possible to the actual performances associated with these configurations.

In a particular embodiment of the invention, this prediction function NN⁰ is an artificial neural network. It should be noted that this example is not limiting and that the prediction function NN⁰ may, in another embodiment of the invention, take the form of a standard machine learning model, for example a linear regression model or a random forest model.

If the prediction function NN⁰ is differentiable, as is for example a neural network, the update of this prediction function NN⁰ from the history can be performed by a gradient descent algorithm [the man skilled in the art can consult the 2017 paper "An overview of gradient descent optimization algorithms" by Sebastian Ruder, arXiv:1609.04747v2, 2017] which allows to configure the prediction function NN⁰ to minimize an error between the actual performances associated with the configurations included in the initial history H⁰ and the predicted performances computed by this prediction function NN⁰. This error is for example the average of the squares of the differences between each predicted performance and each actual performance associated with each configuration included in the history.

In a particular implementation of the invention, the initial prediction function NN⁰ computes a predicted performance of a configuration from descriptive values of that configuration. In this embodiment, the initial and new prediction functions will also, in the exploration step E20, use descriptive values of a configuration to calculate the predicted performance of that configuration.

During the first calculation of the predicted performance of a given configuration, the descriptive values of this configuration can be determined and then stored, so that these descriptive values do not have to be determined again during a subsequent calculation of the predicted performance of this same configuration.

In a particular embodiment of the invention, the descriptive values of a configuration of the beams bⁱ of a LiDAR system LiD comprise, for each beam b' of the LiDAR system LiD:
- an average of a number of points obtained during a fixed number M of scans by this beam bⁱ;
- an average of a number of points of a given semantic class obtained during the fixed number M of scans by this beam bⁱ;
- an average of distances between an axis of the LiDAR system LiD and the points obtained during the fixed number M of scans by this beam bⁱ;
- a dispersion of distances between an axis of the LiDAR system LiD and the points obtained during the fixed number M of scans by this beam bⁱ;
- an average of angles between an axis of the LiDAR system LiD and the points obtained during the fixed number M of scans by said beam bⁱ;
and for each pair of distinct beams bⁱ and b^{j}:
- a difference between the average of angles obtained for beam bⁱ and the average of angles obtained for beam b^{j}.

In this embodiment, a number of at least M scans by the LiDAR system are thus performed for each configuration whose predicted performance is calculated, where, as mentioned above, each scan corresponds to obtaining a point cloud corresponding to the positions in the space surrounding the LiDAR system at which the beams bⁱ have reflected.

In a particular embodiment of the invention where a configuration of a LiDAR system LiD has values of angles that each of these beams form, and in order to not repeat the execution of M scans for each configuration of the LiDAR system LiD, a second LiDAR system with a larger number of beams can be used.

For example, to implement the method of determining an optimal configuration of a 4-beam LiDAR system, according to one embodiment of the invention, a second 40-beam LiDAR system can be used to perform M scans.

In this same example, the different beams of this second LiDAR system form different angles with an axis of this system. Thus, for a scan by this second LiDAR system, selecting the points collected by 4 of the 40 beams is equivalent to obtaining a scan of the LiDAR system comprising only 4 beams configured according to these same angles. It is therefore possible, from a single scan of the second LiDAR system with 40 beams, to simulate the scans of the LiDAR system with 4 beams for all the configurations with 4 values of angles among 40 allowed, i.e. 91390 possible configurations.

These scans are, for example, performed prior to the implementation of the method of determining an optimal beam configuration of the LiDAR system.

Note that in a particular embodiment of the invention, these scans are also used in obtaining actual performance associated with configurations of a LiDAR system, as described below for particular embodiments of the invention.

In the step E12 of selecting a first configuration, the initial history H⁰ obtained in step E10 is used to obtain this first configuration which is used as the initial configuration CLC⁰ at the beginning of the exploration step E20. The first selected configuration is the configuration CLₙ of the initial history H⁰ with the best associated actual performance VTₙ.

In the first iteration I¹, a new configuration CL¹ and its associated actual performance VT¹ are added to the initial history H⁰, which then becomes the new history H¹, which itself will constitute the initial history in the next iteration I², and so on.

Thus, at each iteration I^{t}, a new configuration CL^{t} and its associated actual performance VT^{t} are added to the initial history H^{t-1} to form the new history H^{t} that will serve as the initial history in the next iteration I^{t+1}.

In step E30, the optimal configuration CLB is selected from the new history H^{T} formed during the T iterations I¹-I^{T} of the exploration step E20. This optimal configuration CLB is the configuration in the history with the best associated actual performance.

Figure 2 represents the various substeps E20A, E20B, E20C, E20D of the aforementioned exploration step E20, in a particular embodiment of the invention.

In the embodiment of the determination method shown in Figure 2, the exploration step E20 is performed in a fixed number T of iterations I¹-I^{T}, and thus allows to obtain at most T new configurations CL¹-CL^{T} and their associated actual performances VT¹-VT^{T}. As mentioned before, the number T can be equal to 100.

In other embodiments of the invention not shown in Figure 2, different stopping criteria may be used to terminate the exploration step. For example, following the addition, in the initial history, of a new configuration having an associated actual performance exceeding a predetermined threshold, the exploration step E20 is terminated.

In substep E20A of an iteration I^{t} of the exploration step E20, a new configuration CL^{t} is selected from potential configurations CLPₖ^{t} of the LiDAR system according to an exploration strategy.

In the particular embodiment shown in Figure 2, the potential configurations CLPₖ^{t} are determined from the initial configuration CL^{t-1} obtained in the previous iteration if it exists or from the initial configuration CL⁰ obtained in step E12 otherwise.

In this particular embodiment of the invention, these potential configurations CLPₖ^{t} are obtained by applying potential actions APₖ to the initial configuration CL⁰ or CL^{t-1}. If a configuration corresponds to the values of the angles of each of the beams of the LiDAR system, these potential actions APₖ may, for example, correspond to angle variations.

The choice of small values of these angle variations allows to obtain potential configurations close to the initial configuration. The inventors observed that angle variations of more or less two angle units (an angle unit being the difference between two consecutive angles that can be formed by a beam of the LiDAR system LiD), allowed to obtain configurations close enough to the initial configuration, and far enough away to obtain a fast exploration of the configuration space of the LiDAR system LiD.

As mentioned earlier, the exploration strategy indicating which new configuration CL^{t} select from the potential configurations CLPₖ^{t} favors selecting the configuration from the initial history H^{t-1} or H⁰ whose initial prediction function NN^{t} or NN⁰ predicts the best predicted performance.

However, this does not imply that the newly selected configuration must, at each iteration of the exploration step E20, be the initial history configuration with the best predicted performance.

Notably, in one embodiment of the determination method according to the invention, the exploration strategy is a so-called "ε-greedy" strategy. To implement this strategy to select a new configuration, a number is randomly drawn between 0 and 1, initially. If this number is less than a probability ε, then the new configuration is randomly selected from the potential configurations. If this number is greater than probability ε, then the new configuration selected is the potential configuration with the best performance predicted by the initial prediction function.

Note that a lower value of ε favors the exploitation of the prediction function NN^{t}, i.e., favors all the more the selection of new configurations with better predicted performances. Conversely, increasing the value of ε increases exploration, by allowing more new configurations to be selected at random.

A typical value of ε allowing a good trade-off between exploitation and exploration is 0.1. Note, that in a particular embodiment of the determination method according to the invention, the value of ε is determined as a function of the number of iterations I^{t} of the exploration step having been performed. For example, ε may decrease with the number of iterations. Thus, the more the initial prediction function has been updated, the more its exploitation is favored.

Note that the invention of is not limited to the use of a so-called "ε-greedy" exploration strategy.

For example, according to another embodiment of the determination method, the exploration strategy is a Bayesian optimization strategy [the man skilled in the art can consult "Bayesian Optimization", by Roman Garnett, Cambridge University Press, 2022, also published on github: https://github.com/bayesoptbook/bayesoptbook.github.io]. In this example, a prediction function of a predicted performance is determined from a probability distribution, for example Gaussian, of the actual performances associated with the possible configurations of the LiDAR system.

This probability distribution makes it possible to calculate, from a given configuration, and from the knowledge of the configurations included in the initial history with their associated actual performances, probabilities of the possible values of the actual performance associated with this given configuration. These probabilities of these possible values allow to calculate an average and a standard deviation of the possible values of the actual performance associated to the given configuration.

In this same example, the predicted performance of a given configuration is the average of the possible values of the actual performance associated with this given configuration. Furthermore, a value proportional to the standard deviation of the possible values of the actual performance associated with this given configuration corresponds to an uncertainty on the predicted performance of this configuration.

In such an implementation, the exploration strategy indicates for example to select the new configuration whose predicted performance summed with the uncertainty on this predicted performance is the highest.

In the embodiment of the determination method whose exploration step E20 is shown in Figure 2, if the new configuration CL^{t} selected during an iteration I^{t} is already included in the initial history H^{t-1}, a new iteration I^{t+1}of the exploration step E20 is implemented.

In substep E20B, the actual performance VT^{t} associated with the new configuration CL^{t}, itself obtained in substep E20A, is obtained. In a particular embodiment of the determination method in accordance with the invention, the actual performance is obtained from scans of the LiDAR system LiD configured according to this new configuration. These scans are, for example, the same scans as those, described above, which allowed the determination of descriptive values of configurations of the LiDAR system LiD.

The use of these scans in the execution of specific tasks is described below for two examples of specific tasks: the detection of objects in three dimensions, and the localization of objects on a map.

In substep E20C, the new configuration CT^{t} and its associated actual performance VT^{t}, obtained in substeps E20A and E20B, are added to the initial history H^{t-1}, which then becomes the new history H^{t}, which is used in the step E20D of updating the initial prediction function NN^{t} and will constitute the initial history in the next iteration I^{t+1} of the exploration step, if it takes place.

During step E20D, the initial prediction function NN^{t} is updated from the new history H^{t} obtained during substep E20C. This update is for example performed in the same way as step E11 of updating the initial prediction function NN⁰ from the initial history H⁰. The new prediction function NN^{t+1} thus obtained will constitute the initial prediction function during the next iteration of the exploration step, if it takes place.

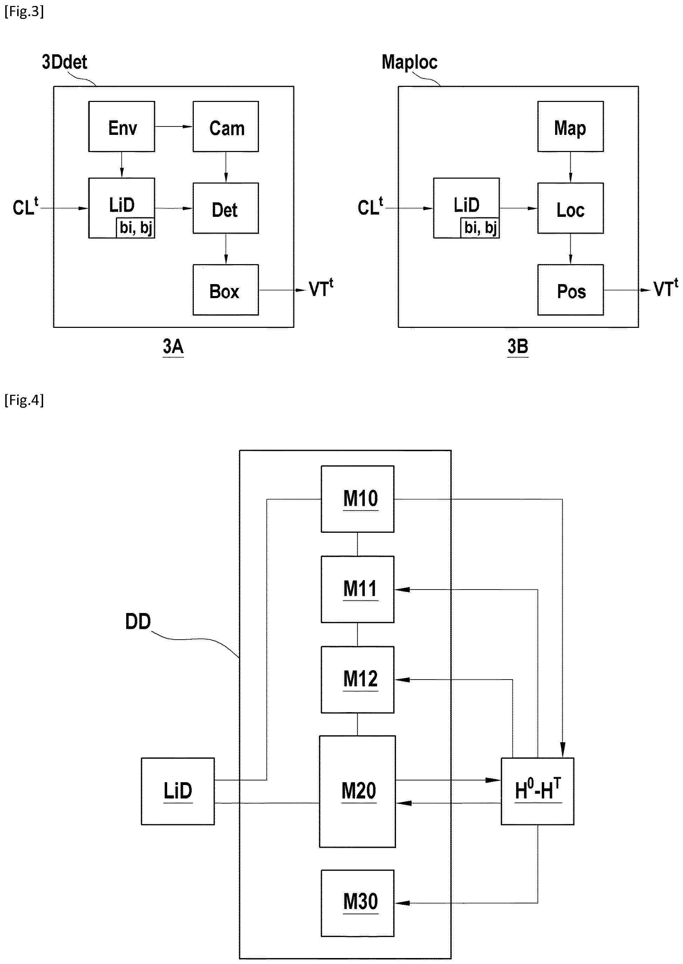

Figure 3 represents the execution of two separate specific tasks to achieve actual performance associated with a beam configuration of the LiDAR system.

Figure 3A represents the task of detecting objects in three dimensions while Figure 3B represents the task of locating objects on a map.

In an embodiment of the invention not shown in Figure 3A, a LiDAR system can be directly used for three-dimensional object detection. This means that object detection is performed from the point clouds harvested by the LiDAR system, without the additional use of a device other than the LiDAR system. In particular, this allows for accurate object detection if the LiDAR system has many beams, so that the point cloud it collects covers a large portion of the surrounding space.

This point cloud is then analyzed by a three-dimensional object detection algorithm, for example the PointPillars algorithm [the man skilled in the art can consult the article "PointPillars: Fast Encoders for Object Detection from Point Clouds", by Alex H. Lang et al, arXiv:1812.05784v2, 2019].

Conversely, in the embodiment of the invention shown in Figure 3A, the point cloud that is analyzed by an object detection algorithm is not obtained by the LiDAR system alone, but is obtained in a pipeline 3Ddet.

In this embodiment, the point cloud is obtained from a stereo camera Cam and a LiDAR system LiD configured in a new configuration CL^{t} of its beams.

In this same embodiment, the obtaining of a point cloud is performed in several steps:
- firstly, a depth map of the surrounding space is computed from images of the environment Env taken by the stereo camera.
- secondly, this depth map is corrected from a point cloud representing the same environment Env captured by the LiDAR system LiD.
- thirdly, a point cloud representing the environment Env is generated from the corrected depth map.

An example of such a method is Pseudo-LiDAR++ [the man skilled in the art can consult the article "Pseudo-LiDAR++: Accurate Depth for 3D Object Detection in Autonomous Driving", by You Yurong et al, arXiv:1906.06310v3, 2020]

The point cloud generated from the corrected depth map is then analyzed by a three-dimensional object detection algorithm Det, such as PointPillars, to detect objects in the surrounding space represented by this point cloud.

For example, a point cloud is obtained for each scan and capture performed by the LiDAR system and the stereo camera, respectively. Each obtained point cloud is analyzed by a three-dimensional object detection algorithm.

A three-dimensional object detection algorithm generates three-dimensional Boxes Box corresponding to the positions occupied by the objects detected by this algorithm.

In order to obtain an object detection score, these three-dimensional boxes Box generated by the algorithm are compared to three-dimensional boxes corresponding to the true positions of objects in three-dimensional space, for example determined by a human.

These comparisons between the boxes Box generated by the object detection algorithm, and the boxes corresponding to the true positions of the objects, make it possible to calculate a detection score for all the scans and captures of the surrounding space performed and analyzed by the detection algorithm.

This detection score is for example a mean average precision score.

In the embodiment of the determination method shown in Figure 3A, the actual performance VT^{t} associated with the configuration CL^{t} of the LiDAR system used in obtaining this detection score is equal to this detection score.

Figure 3B shows a pipeline Maploc for executing an object localization task on a map MAP with a LiDAR system LiD configured according to a new configuration CL^{t}.

In this example, the LiDAR system LiD scans through the space represented by the map, and geographic position data from the LiDAR system (e.g., GNSS data) is obtained at each scan.

The position of the LiDAR system LiD at each scan is projected onto the map from the geographic data.

In this same example, the LiDAR system LiD detects objects and their positions relative to the LiDAR system LiD during each scan.

In this same example, from the positions of the LiDAR system on the map and the positions of the objects detected by the LiDAR system at each scan, the positions Loc of these detected objects are located on the map, with an ICP algorithm [the man skilled in the art can consult the article "ICP-Based Pose-Graph SLAM", by Ellon Mendes et al, IEEE International Symposium on Safety, Security, and Rescue Robotics (SSRR), 2016, pp. 195-200].

To obtain a localization score, these positions Loc obtained from the LiDAR system LiD are for example compared to the true positions of objects on the map, for example determined by a human.

In the embodiment corresponding to Figure 3B, the actual performance VT^{t} associated with the configuration CL^{t} is equal to such an accuracy score obtained from the LiDAR system LiD configured according to this configuration CL^{t}.

Figure 4 depicts a determination device DD according to a particular embodiment of the invention for determining an optimal configuration CLB of a LiDAR system LiD.

The device DD includes a module M10 for obtaining an initial history H⁰. This module randomly selects possible configurations of the LiDAR system and obtains the actual performances associated with the configurations thus selected, to constitute this initial history H⁰.

The device DD includes a module M11 for the first update of an initial prediction function from the initial history H⁰ obtained by the module M10.

The device DD also includes a module M12 for selecting an initial configuration CL⁰ as the configuration of the initial history H⁰ for which the initial prediction function calculates the best predicted performance.

The device DD includes a module M20 configured to implement an exploration step in accordance with the determination method described above. This exploration step implemented by the module M20 results in obtaining a new history H^{T}.

The module M30 of the device DD selects the optimal configuration CLB as the configuration obtained by the module M20, having the best associated actual performance among configurations included in the history.

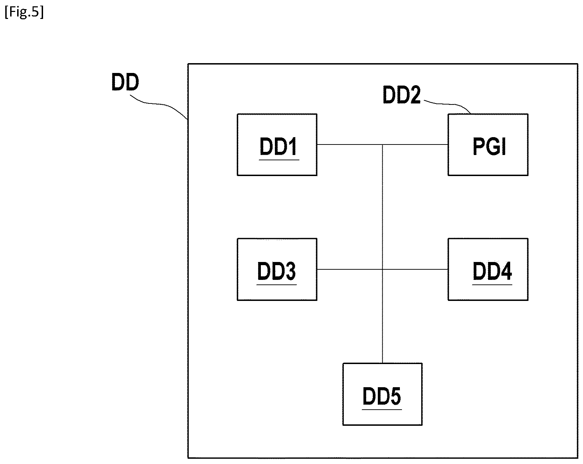

Figure 5 depicts the hardware architecture of a DD determination device according to a particular embodiment of the invention.

In the embodiment described herein, the determination device DD has a hardware architecture of a computer. In particular, it comprises a processor DD1, a read-only memory DD2, a random access memory DD3, a rewritable non-volatile memory DD4 and communication means DD5.

The read-only memory DD2 of the device DD constitutes a storage medium in accordance with the invention, readable by the processor DD1 and on which is stored a computer program PGI in accordance with the invention, this program comprising instructions for executing the steps of a determination method in accordance with the invention described previously with reference to Figure 1 in an embodiment.

The computer program PGI defines functional modules of the determination device DD shown in Figure 4.

## Claims

1. A method for determining an optimal configuration (CLB) of the beams (bⁱ)of a LiDAR system (LiD) intended to perform a specific task, in which method:
- an actual performance associated with a configuration of the beams corresponds to a quality of the result of an execution of said specific task by said LiDAR system (LiD) configured according to this configuration;
- a predicted performance of a configuration is a prediction of an actual performance associated with this configuration;
said method comprising:
(i) an exploration step (E20) comprising at least one iteration (I^{t}) of the substeps:
(a) selecting (E20A) a new configuration from among at least one potential configuration (CLPₖ^{t}) of the LiDAR system (LiD), said selecting being performed according to an exploration strategy for which a configuration, whose predicted performance (VP^{t}) is the best among said at least one potential configuration, has a higher chance to be selected, the predicted performance of a configuration being assigned by an initial prediction function, said initial prediction function being a machine learning model;
(b) obtaining (E20B) an actual performance (VT^{t}) associated with said new configuration (CL^{t});
(c) obtaining (E20C) a new history (H^{t}) by adding said new configuration (CL^{t}) and its said actual performance (VT^{t}) associated with an initial history (H^{t-1}),
(d) obtaining (E20D) a new prediction function (NN^{t+1}) by modifying said initial prediction function (NN^{t}) in such a way that it assigns, to at least one configuration (CLₙ) included in the new history (H^{t}), at least one predicted performance (VPₙ^{t}) that is as close as possible to the associated at least one actual performance (VTₙ);
said new history (H^{t}) and said new prediction function (NN^{t+1}) constituting, respectively, said initial history (H^{t-1}) and said initial prediction function (N^{t}), for a next iteration of the exploration step (E20), until a stopping criterion of the exploration step (E20) is satisfied;
(ii) determining (E30) said optimal configuration (CLB) as being the configuration (CLₙ) having the best associated actual performance (VTₙ), among the new history (H^{t}).

2. The method according to claim 1 wherein said stopping criterion is reaching a predetermined number (T) of said iterations (I^{t}) of said exploration step (E20).

3. The method according to claim 1 wherein said stopping criterion is the presence, in said new history (H^{t}), of an actual performance (VT^{t}) exceeding a threshold.

4. The method according to any of claims 1 to 3 wherein a said prediction function (NN^{t}) is an artificial neural network.

5. The method according to any one of claims 1 to 4 wherein:
- said at least one potential configuration (CLPₖ^{t}) is determined by applying at least one potential action (APₖ) to an initial configuration (CL^{t-1}) included in the initial history, and
- said new configuration (CL^{t}) constitutes said initial configuration (CL^{t-1}) for a subsequent iteration of the exploration step (E20).

6. The method according to claim 5 in which
- the initial history (H⁰) comprises at least one configuration (CLₙ) of the LiDAR system (LiD) and its associated actual performance (VTₙ),
and comprising
- a step (E12), performed before said exploration step (E20), of selecting a first configuration (CLO) as the configuration (CLₙ) of the initial history (H⁰) that has the best associated actual performance (VTₙ), said first configuration (CLO) constituting the initial configuration (CLC⁰) during a first iteration of the exploration step (E20).

7. The method according to any of claims 1 to 6 wherein :
- a probability value ε is set or calculated according to a number of iterations (I^{t}) of the exploration step (E20) having been performed ;
- said exploration strategy indicates to select,
(i) with a probability equal to ε, the new configuration (CL^{t}) randomly among said at least one potential configurations (CLPₖ^{t}), or
(ii) with a probability equal to 1-ε, the new configuration (CL^{t}), among said potential configurations (CLPₖ^{t}), to which said initial prediction function (NN^{t}) assigns the best predicted performance (VP^{t}).

8. The method according to one of claims 1 to 7 in which the attribution of a said predicted performance (VPₙ^{t}) to a said configuration (CLₙ) of the LiDAR system (LiD), by a said prediction function (NN^{t}), comprises the steps of:
- obtaining descriptive values (Fₙ) of the said configuration (CLₙ);
- calculating by the said initial prediction function (NN^{t}), from these descriptive values (Fₙ), the predicted performance (VPₙ^{t}) of the said configuration (CLₙ).

9. The method according to claim 8 in which said descriptive values (Fₙ10. of said configuration (CLₙ) comprise, for at least one said beam (b') of the LiDAR system (LiD) configured according to said configuration (CLₙ), at least one value from among :
- an average of a number of points obtained during a fixed number (M) of scans by said at least one beam (b');
- an average of a number of points of a given semantic class obtained during the fixed number (M) of scans by said at least one beam (b');
- an average of distances between the LiDAR system (LiD) and the points obtained during the fixed number (M) of scans by said at least one beam (b');
- a dispersion of distances between the LiDAR system (LiD) and the points obtained during the fixed number (M) of scans by said at least one beam (b');
- an average of angles between an axis of the LiDAR system (LiD) and the points obtained during the fixed number (M) of scans by said at least one beam (b');
- a difference between said average of angles obtained for said beam (b') and an average of angles obtained for a distinct beam (b^{j}) ;

10. The method according to any one of claims 1 to 9 comprising a step (E10), performed before said exploration step (E20), of obtaining the initial history (H⁰) by randomly selecting at least one configuration of the LiDAR system (LiD) and obtaining the at least one actual performance associated with this at least one configuration.

11. The method according to one of claims 1 to 10 in which
- the initial history (H⁰) includes at least one configuration (CLₙ) of the LiDAR system (LiD) and its associated actual performance (VTₙ),
and comprising
- a step (E11), performed before said exploration step (E20), of first updating the initial prediction function (NN⁰) from the initial history (H⁰).

12. The method according to one of claims 1 to 11 wherein the substep a of selecting (E20A) said new configuration (CL^{t}) is followed by:
- the end of the current iteration (I^{t}) of the exploration step (E20) if and only if said new configuration (CL^{t}) is included in the initial history (H^{t-1}),
- the end of the exploration step (E20) if said stopping criterion is satisfied, or
- the next iteration (I^{t+1}) of the exploration step (E20) otherwise.

13. The method according to any of claims 1 to 12 wherein:
- said specific task is a detection of objects in three dimensions, and
- obtaining an actual performance (VTₙ) associated with a said configuration (CLₙ) comprises the following steps:
(i) detecting objects in three dimensions with the LiDAR system (LiD) configured according to said configuration (CLₙ);
(ii) calculating a detection score from a result of the detection step i;
(iii) calculating the actual performance (VTₙ) as a function of said detection score.

14. The method according to any of claims 1 to 12 wherein
- said specific task is a localization of objects on a map, and
- obtaining an actual performance (VTₙ) associated with a said configuration (CLₙ) comprises the following steps:
(i) localizing objects on a map with the LiDAR system (LiD) configured according to said configuration (CLₙ);
(ii) calculating a localization score from a result of the localization step i;
(iii) calculating the actual performance (VTₙ) as a function of said localization score.

15. The method according to any of claims 1 to 14 wherein the execution of the specific task by the LiDAR system (LiD) is computer simulated.

16. The method according to any of claims 1 to 15 comprising a step of configuring a LiDAR system (LiD) according to the optimal configuration (CLB).

17. A device (DD) for determining an optimal configuration (CLB) of the beams (b') of a LiDAR system (LiD) intended to perform a specific task, for which device:
- an actual performance associated with a configuration of the beams corresponds to a quality of the result of an execution of said specific task by said LiDAR system (LiD) configured according to this configuration;
- a predicted performance of a configuration is a prediction of an actual performance associated with this configuration;
said device comprising:
(i) a module (M20) configured to implement an exploration step comprising at least one iteration (It) of the substeps:
(a) selecting (E20A) a new configuration from among at least one potential configuration (CLPₖ^{t}) of the LiDAR system (LiD), said selecting being performed according to an exploration strategy for which a configuration, whose predicted performance (VP^{t}) is the best among said at least one potential configuration, has a higher chance to be selected, the predicted performance of a configuration being assigned by an initial prediction function, said initial prediction function being a machine learning model;
(b) obtaining (E20B) an actual performance (VT^{t}) associated with said new configuration (CL^{t});
(c) obtaining (E20C) a new history (H^{t}) by adding said new configuration (CL^{t}) and its said actual performance (VT^{t}) associated with an initial history (H^{t-1});
(d) obtaining (E20D) a new prediction function (NN^{t+1}) by modifying said initial prediction function (NN^{t}) in such a way that it assigns, to at least one configuration (CLₙ) included in the new history (H^{t}), at least one predicted performance (VPₙ^{t}) that is as close as possible to the associated at least one actual performance (VTₙ);
said new history (H^{t}) and said new prediction function (NN^{t+1}) constituting, respectively, said initial history (H^{t-1}) and said initial prediction function (N^{t}), for a next iteration of the exploration step (E20), until a stopping criterion of the exploration step (E20) is satisfied;
(ii) a module for determining (E30) said optimal configuration (CLB) as being the configuration (CLₙ) having the best associated actual performance (VTₙ), among the new history (H^{t}).

18. A computer program (PGI) comprising instructions for performing, when executed on a computer,all the steps of the method according to at least one of claims 1-16.

19. A storage medium (DD2), readable by computer equipment (EI), of a computer program (PGI) comprising instructions for executing by said computer equipment all the steps of the method according to at least one of claims 1 to 16.

## Patentansprüche

1. Verfahren zum Bestimmen einer optimalen Konfiguration (CLB) der Strahlen (bⁱ) eines LiDAR-Systems (LiD), das dazu bestimmt ist, eine bestimmte Aufgabe durchzuführen, wobei in dem Verfahren:
- eine tatsächliche Leistung, die mit einer Konfiguration der Strahlen verbunden ist, einer Qualität des Resultats einer Ausführung der spezifischen Aufgabe durch das LiDAR-System (LiD) entspricht, das gemäß dieser Konfiguration konfiguriert ist;
- eine vorhergesagte Leistung einer Konfiguration eine Vorhersage einer tatsächlichen Leistung ist, die mit dieser Konfiguration assoziiert ist;
das Verfahren umfassend:
(i) einen Erkundungsschritt (E20), umfassend mindestens eine Iteration (I^{t}) der folgenden Teilschritte:
(a) Auswählen (E20A) einer neuen Konfiguration aus mindestens einer potenziellen Konfiguration (CLPₖ^{t}) des LiDAR-Systems (LiD), wobei ein Auswählen gemäß einer Erkundungsstrategie durchgeführt wird, für die eine Konfiguration, deren vorhergesagte Leistung (VP^{t}) die beste von der mindestens einen potenziellen Konfiguration ist, eine höhere Chance hat, ausgewählt zu werden, wobei die vorhergesagte Leistung einer Konfiguration durch eine anfängliche Vorhersagefunktion zugewiesen wird, wobei die anfängliche Vorhersagefunktion ein Modell für maschinelles Lernen ist;
(b) Erlangen (E20B) einer tatsächlichen Leistung (VT^{t}) assoziiert mit der neuen Konfiguration (CL^{t});
(c) Erlangen (E20C) einer neuen Historie (H^{t}) durch Hinzufügen der neuen Konfiguration (CL^{t}) und ihrer tatsächlichen Leistung (VT^{t}), die mit einer anfänglichen Historie (H^{t-1}) assoziiert ist;
(d) Erlangen (E20D) einer neuen Vorhersagefunktion (NN^{t+1}) durch Modifizieren der anfänglichen Vorhersagefunktion (NN^{t}) auf eine Weise, dass sie mindestens einer Konfiguration (CLₙ), die in der neuen Historie (H^{t}) beinhaltet ist, mindestens eine vorhergesagte Leistung (VPₙ^{t}) zuweist, die der assoziierten mindestens einen tatsächlichen Leistung (VTₙ) so nahe wie möglich ist;
wobei die neue Historie (H^{t}) und die neue Vorhersagefunktion (NN^{t+1}) jeweils die anfängliche Historie (H^{t-1}) und die anfängliche Vorhersagefunktion (N^{t}) für eine nächste Iteration des Erkundungsschritts (E20) darstellen, bis ein Abbruchkriterium des Erkundungsschritts (E20) erfüllt ist;
(ii) Bestimmen (E30) der optimalen Konfiguration (CLB) als die Konfiguration (CLₙ), die die beste assoziierte tatsächliche Leistung (VTₙ) von der neuen Historie (H^{t}) aufweist.

2. Verfahren nach Anspruch 1, wobei das Abbruchkriterium ein Erreichen einer vorbestimmten Anzahl (T) der Iterationen (I^{t}) des Erkundungsschritts (E20) ist.

3. Verfahren nach Anspruch 1, wobei das Abbruchkriterium das Vorhandensein einer tatsächlichen Leistung (VT^{t}) in der neuen Historie (H^{t}) ist, die einen Schwellenwert überschreitet.

4. Verfahren nach einem der Ansprüche 1 bis 3, wobei die Vorhersagefunktion (NN^{t}) ein künstliches neuronales Netz ist.

5. Verfahren nach einem der Ansprüche 1 bis 4, wobei:
- die mindestens eine potentielle Konfiguration (CLPₖ^{t}) durch Anwenden mindestens einer potentiellen Aktion (APₖ) auf eine anfängliche Konfiguration (CL^{t-1}), die in der anfänglichen Historie beinhaltet ist, bestimmt wird, und
- die neue Konfiguration (CL^{t}) die anfängliche Konfiguration (CL^{t-1}) für eine nachfolgende Iteration des Erkundungsschritts (E20) darstellt.

6. Verfahren nach Anspruch 5, wobei
- die anfängliche Historie (H⁰) mindestens eine Konfiguration (CLₙ) des LiDAR-Systems (LiD) und die damit verbundene tatsächliche Leistung (VTₙ) umfasst,
und umfassend
- einen Schritt (E12), der vor dem Erkundungsschritt (E20) durchgeführt wird, eines Auswählens einer ersten Konfiguration (CLO) als die Konfiguration (CLₙ) der anfänglichen Historie (H⁰), die die beste assoziierte tatsächliche Leistung (VTₙ) aufweist, wobei die erste Konfiguration (CLO) die anfängliche Konfiguration (CLC⁰) während einer ersten Iteration des Erkundungsschritts (E20) darstellt.

7. Verfahren nach einem der Ansprüche 1 bis 6, wobei:
- ein Wahrscheinlichkeitswert ε gemäß einer Anzahl der durchgeführten Iterationen (I^{t}) des Erkundungsschritts (E20) festgelegt oder berechnet wird;
- wobei die Erkundungsstrategie angibt, Folgendes auszuwählen
(i) mit einer Wahrscheinlichkeit gleich ε die neue Konfiguration (CL^{t}) zufällig aus der mindestens einen möglichen Konfiguration (CLPₖ^{t}), oder
(ii) mit einer Wahrscheinlichkeit gleich 1-ε die neue Konfiguration (CL^{t}) aus den möglichen Konfigurationen (CLPₖ^{t}), der die anfängliche Vorhersagefunktion (NN^{t}) die beste vorhergesagte Leistung (VP^{t}) zuweist.

8. Verfahren nach einem der Ansprüche 1 bis 7, wobei die Zuordnung einer vorhergesagten Leistung (VPₙ^{t}) zu einer Konfiguration (CLₙ) des LiDAR-Systems (LiD) durch eine Vorhersagefunktion (NN^{t}) die folgenden Schritte umfasst:
- Erlangen von Beschreibungswerten (Fₙ) für die Konfiguration (CLₙ);
- Berechnen, durch die anfängliche Vorhersagefunktion (NN^{t}), der vorhergesagten Leistung (VPₙ^{t}) der Konfiguration (CLₙ) aus diesen Beschreibungswerten (Fₙ).

9. Verfahren nach Anspruch 8, wobei die Beschreibungswerte (Fₙ) der Konfiguration (CLₙ) für mindestens einen der Strahlen (bⁱ) des gemäß der Konfiguration (CLₙ) konfigurierten LiDAR-Systems (LiD) mindestens einen Wert von Folgenden umfassen:
- einen Durchschnitt einer Anzahl von Punkten, die während einer festgelegten Anzahl (M) von Abtastungen durch den mindestens einen Strahl (bⁱ) erlangt werden;
- einen Durchschnitt einer Anzahl von Punkten einer gegebenen semantischen Klasse, die während der festgelegten Anzahl (M) von Abtastungen durch den mindestens einen Strahl (bⁱ) erlangt werden;
- einen Durchschnitt von Abständen zwischen dem LiDAR-System (LiD) und den Punkten, die während der festgelegten Anzahl (M) von Abtastungen durch den mindestens einen Strahl (bⁱ) erlangt werden;
- eine Streuung von Abständen zwischen dem LiDAR-System (LiD) und den Punkten, die während der festgelegten Anzahl (M) von Abtastungen durch den mindestens einen Strahl (bⁱ) erlangt werden;
- einen Durchschnitt von Winkeln zwischen einer Achse des LiDAR-Systems (LiD) und den Punkten, die während der festgelegten Anzahl (M) von Abtastungen durch den mindestens einen Strahl (bⁱ) erlangt werden;
- eine Differenz zwischen dem Durchschnitt von Winkeln, der für den Strahl (bⁱ) erlangt wird, und einen Durchschnitt von Winkeln, der für einen anderen Strahl (bⁱ) erlangt wird.

10. Verfahren nach einem der Ansprüche 1 bis 9, umfassend einen Schritt (E10), der vor dem Erkundungsschritt (E20) durchgeführt wird, eines Erlangens der anfänglichen Historie (H⁰) durch zufälliges Auswählen mindestens einer Konfiguration des LiDAR-Systems (LiD) und eines Erlangens der mindestens einen tatsächlichen Leistung, die mit dieser mindestens einen Konfiguration assoziiert ist.

11. Verfahren nach einem der Ansprüche 1 bis 10, wobei
- die anfängliche Historie (H⁰) mindestens eine Konfiguration (CLₙ) des LiDAR-Systems (LiD) und ihre damit assoziierte tatsächliche Leistung (VTₙ) beinhaltet,
und umfassend
- einen Schritt (E11), der vor dem Erkundungsschritt (E20) durchgeführt wird, eines ersten Aktualisierens der anfänglichen Vorhersagefunktion (NN⁰) von der anfänglichen Historie (H⁰).

12. Verfahren nach einem der Ansprüche 1 bis 11, wobei auf den Teilschritt a eines Auswählens (E20A) der neuen Konfiguration (CL^{t}) Folgendes folgt:
- das Ende der aktuellen Iteration (I^{t}) des Erkundungsschritts (E20), wenn und nur wenn die neue Konfiguration (CL^{t}) in der anfängliche Historie (H^{t-1}) beinhaltet ist,
- das Ende des Erkundungsschritts (E20), wenn das Abbruchkriterium erfüllt ist, oder
- sonst die nächste Iteration (I^{t-1}) des Erkundungsschritts (E20).

13. Verfahren nach einem der Ansprüche 1 bis 12, wobei:
- die spezifische Aufgabe eine Erfassung von Objekten in drei Dimensionen ist, und
- ein Erlangen einer tatsächlichen Leistung (VTₙ), die mit der Konfiguration (CLₙ) assoziiert ist, die folgenden Schritte umfasst:
(i) Erfassen von Objekten in drei Dimensionen mit dem LiDAR-System (LiD), das gemäß der Konfiguration (CLₙ) konfiguriert ist;
(iii) Berechnen eines Erfassungsresultats aus einem Resultat des Erfassungsschritts i;
(iv) Berechnen der tatsächlichen Leistung (VTₙ) abhängig von der Erfassungsrate.

14. Verfahren nach einem der Ansprüche 1 bis 12, wobei
- die spezifische Aufgabe eine Lokalisierung von Objekten auf einer Karte ist, und
- ein Erlangen einer tatsächlichen Leistung (VTₙ), die mit der Konfiguration (CLₙ) assoziiert ist, die folgenden Schritte umfasst:
(i) Lokalisieren von Objekten auf einer Karte mit dem LiDAR-System (LiD), das gemäß der Konfiguration (CLₙ) konfiguriert ist;
(ii) Berechnen einer Lokalisierungsrate aus einem Resultat des Lokalisierungsschritts i;
(iii) Berechnen der tatsächlichen Leistung (VTₙ) abhängig von der Lokalisierungsrate.

15. Verfahren nach einem der Ansprüche 1 bis 14, wobei die Ausführung der spezifischen Aufgabe durch das LiDAR-System (LiD) computersimuliert wird.

16. Verfahren nach einem der Ansprüche 1 bis 15, umfassend einen Schritt eines Konfigurierens eines LiDAR-Systems (LiD) gemäß der optimalen Konfiguration (CLB).

17. Vorrichtung (DD) zum Bestimmen einer optimalen Konfiguration (CLB) der Strahlen (bⁱ) eines LiDAR-Systems (LiD), das dazu bestimmt ist, eine bestimmte Aufgabe durchzuführen, wobei für die Vorrichtung:
- eine tatsächliche Leistung, die mit einer Konfiguration der Strahlen verbunden ist, einer Qualität des Resultats einer Ausführung der spezifischen Aufgabe durch das LiDAR-System (LiD) entspricht, das gemäß dieser Konfiguration konfiguriert ist;
- eine vorhergesagte Leistung einer Konfiguration eine Vorhersage einer tatsächlichen Leistung ist, die mit dieser Konfiguration assoziiert ist;
die Vorrichtung umfassend:
(i) ein Modul (M20), das konfiguriert ist, um einen Erkundungsschritt zu implementieren, umfassend mindestens eine Iteration (I^{t}) der folgenden Teilschritte:
(a) Auswählen (E20A) einer neuen Konfiguration aus mindestens einer potenziellen Konfiguration (CLPₖ^{t}) des LiDAR-Systems (LiD), wobei ein Auswählen gemäß einer Erkundungsstrategie durchgeführt wird, für die eine Konfiguration, deren vorhergesagte Leistung (VP^{t}) die beste von der mindestens einen potenziellen Konfiguration ist, eine höhere Chance hat, ausgewählt zu werden, wobei die vorhergesagte Leistung einer Konfiguration durch eine anfängliche Vorhersagefunktion zugewiesen wird, wobei die anfängliche Vorhersagefunktion ein Modell für maschinelles Lernen ist;
(b) Erlangen (E20B) einer tatsächlichen Leistung (VT^{t}) assoziiert mit der neuen Konfiguration (CL^{t});
(c) Erlangen (E20C) einer neuen Historie (H^{t}) durch Hinzufügen der neuen Konfiguration (CL^{t}) und ihrer tatsächlichen Leistung (VT^{t}), die mit einer anfänglichen Historie (H^{t-1}) assoziiert ist;
(d) Erlangen (E20D) einer neuen Vorhersagefunktion (NN^{t+1}) durch Modifizieren der anfänglichen Vorhersagefunktion (NN^{t}) auf eine Weise, dass sie mindestens einer Konfiguration (CLₙ), die in der neuen Historie (H^{t}) beinhaltet ist, mindestens eine vorhergesagte Leistung (VPₙ^{t}) zuweist, die der assoziierten mindestens einen tatsächlichen Leistung (VTₙ) so nahe wie möglich ist;
wobei die neue Historie (H^{t}) und die neue Vorhersagefunktion (NN^{t+1}) jeweils die anfängliche Historie (H^{t-1}) und die anfängliche Vorhersagefunktion (N^{t}) für eine nächste Iteration des Erkundungsschritts (E20) darstellen, bis ein Abbruchkriterium des Erkundungsschritts (E20) erfüllt ist;
(iii) ein Modul zum Bestimmen (E30) der optimalen Konfiguration (CLB) als die Konfiguration (CLₙ), die die beste assoziierte tatsächliche Leistung (VTₙ) von der neuen Historie (H^{t}) aufweist.

18. Computerprogramm (PGI), umfassend Anweisungen zum Durchführen aller Schritte des Verfahrens nach mindestens einem der Ansprüche 1-16, wenn es auf einem Computer ausgeführt wird.

19. Speichermedium (DD2), das von einer Computerausrüstung (EI) eines Computerprogramms (PGI) lesbar ist, umfassend Anweisungen zum Ausführen aller Schritte des Verfahrens nach mindestens einem der Ansprüche 1 bis 16 durch die Computerausrüstung.

## Revendications

1. Procédé de détermination d'une configuration optimale (CLB) des faisceaux (bⁱ) d'un système LiDAR (LiD) destiné à mettre en oeuvre une tâche spécifique, dans lequel procédé :
- une performance réelle associée à une configuration des faisceaux correspond à une qualité du résultat d'une exécution de ladite tâche spécifique par ledit système LiDAR (LiD) configuré selon cette configuration ;
- une performance prédite d'une configuration est une prédiction d'une performance réelle associée à cette configuration ;
ledit procédé comprenant :
(i) une étape d'exploration (E20) comprenant au moins une itération (I^{t}) des sous-étapes comprenant le fait de :
(a) sélectionner (E20A) une nouvelle configuration parmi au moins une configuration potentielle (CLPₖ^{t}) du système LiDAR (LiD), ladite sélection étant mise en oeuvre selon une stratégie d'exploration pour laquelle une configuration, dont la performance prédite (VP^{t}) est la meilleure parmi ladite au moins une configuration potentielle, a une plus grande chance d'être sélectionnée, la performance prédite d'une configuration étant attribuée par une fonction de prédiction initiale, ladite fonction de prédiction initiale étant un modèle d'apprentissage automatique ;
(b) obtenir (E20B) une performance réelle (VT^{t}) associée à ladite nouvelle configuration (CL^{t}) ;
(c) obtenir (E20C) un nouvel historique (H^{t}) en ajoutant ladite nouvelle configuration (CL^{t}) et sa performance réelle (VT^{t}) associée à un historique initial (H^{t-1}) ;
(d) obtenir (E20D) une nouvelle fonction de prédiction (NN^{t+1}) en modifiant ladite fonction de prédiction initiale (NN^{t}) de telle sorte qu'elle attribue, à au moins une configuration (CLₙ) incluse dans le nouvel historique (H^{t}), au moins une performance prédite (VPₙ^{t}) qui est aussi proche que possible de ladite au moins une performance réelle associée (VTₙ) ;
ledit nouvel historique (H^{t}) et ladite nouvelle fonction de prédiction (NN^{t+1}) constituant respectivement ledit historique initial (H^{t-1}) et ladite fonction de prédiction initiale (N^{t}), pour une itération suivante de l'étape d'exploration (E20), jusqu'à ce qu'un critère d'arrêt de l'étape d'exploration (E20) soit satisfait ; et
(ii) le fait de déterminer (E30) ladite configuration optimale (CLB) comme étant la configuration (CLₙ) ayant la meilleure performance réelle associée (VTₙ), parmi le nouvel historique (H^{t}).

2. Procédé selon la revendication 1, dans lequel ledit critère d'arrêt correspond au fait d'atteindre un nombre prédéterminé (T) desdites itérations (I^{t}) de ladite étape d'exploration (E20).

3. Procédé selon la revendication 1, dans lequel ledit critère d'arrêt est la présence, dans ledit nouvel historique (H^{t}), d'une performance réelle (VT^{t}) dépassant un seuil.

4. Procédé selon l'une quelconque des revendications 1 à 3, dans lequel une dite fonction de prédiction (NN^{t}) est un réseau de neurones artificiels.

5. Procédé selon l'une quelconque des revendications 1 à 4, dans lequel :
- ladite au moins une configuration potentielle (CLPₖ^{t}) est déterminée en appliquant au moins une action potentielle (APₖ) à une configuration initiale (CL^{t-1}) incluse dans l'historique initial ; et
- ladite nouvelle configuration (CL^{t}) constitue ladite configuration initiale (CL1^{t-1}) pour une itération subséquente de l'étape d'exploration (E20).

6. Procédé selon la revendication 5, dans lequel :
- l'historique initial (H⁰) comprend au moins une configuration (CLₙ) du système LiDAR (LiD) et sa performance réelle associée (VTₙ),
et comprenant
- une étape (E12), mise en oeuvre avant ladite étape d'exploration (E20), de sélection d'une première configuration (CLO) en tant que la configuration (CLₙ) de l'historique initial (H⁰) qui a la meilleure performance réelle associée (VTₙ), ladite première configuration (CLO) constituant la configuration initiale (CLC⁰) pendant une première itération de l'étape d'exploration (E20).

7. Procédé selon l'une quelconque des revendications 1 à 6, dans lequel :
- une valeur de probabilité ε est définie ou calculée en fonction d'un nombre d'itérations (I^{t}) de l'étape d'exploration (E20) ayant été mises en oeuvre ;
- ladite stratégie d'exploration indique de sélectionner,
(i) avec une probabilité égale à ε, la nouvelle configuration (CL^{t}), aléatoirement, parmi ladite au moins une configuration potentielle (CLPₖ^{t}), ou
(ii) avec une probabilité égale à 1- ε, la nouvelle configuration (CL^{t}), parmi lesdites configurations potentielles (CLPₖ^{t}), à laquelle ladite fonction de prédiction initiale (NN^{t}) attribue la meilleure performance prédite (VP^{t}).

8. Procédé selon l'une quelconque des revendications 1 à 7, dans lequel l'attribution d'une dite performance prédite (VPₙ^{t}) à une dite configuration (CLₙ) du système LiDAR (LiD), par une dite fonction de prédiction (NN^{t}), comprend les étapes comprenant le fait de :
- obtenir des valeurs descriptives (Fₙ) de ladite configuration (CLₙ) ; et
- calculer, par le biais de ladite fonction de prédiction initiale (NN^{t}), à partir de ces valeurs descriptives (Fₙ), la performance prédite (VPₙ^{t}) de ladite configuration (CLₙ).

9. Procédé selon la revendication 8, dans lequel lesdites valeurs descriptives (Fₙ) de ladite configuration (CLₙ) comprennent, pour au moins un dit faisceau (b') du système LiDAR (LiD) configuré selon ladite configuration (CLₙ), au moins une valeur parmi :
- une moyenne d'un nombre de points obtenus pendant un nombre fixe (M) de balayages par ledit au moins un faisceau (bⁱ) ;
- une moyenne d'un nombre de points d'une classe sémantique donnée obtenus pendant le nombre fixe (M) de balayages par ledit au moins un faisceau (b') ;
- une moyenne des distances entre le système LiDAR (LiD) et les points obtenus pendant le nombre fixe (M) de balayages par ledit au moins un faisceau (b') ;
- une dispersion des distances entre le système LiDAR (LiD) et les points obtenus pendant le nombre fixe (M) de balayages par ledit au moins un faisceau (b') ;
- une moyenne des angles entre un axe du système LiDAR (LiD) et les points obtenus pendant le nombre fixe (M) de balayages par ledit au moins un faisceau (b') ;
- une différence entre ladite moyenne des angles obtenus pour ledit faisceau (bⁱ) et une moyenne des angles obtenus pour un faisceau distinct (b^{j}).

10. Procédé selon l'une quelconque des revendications 1 à 9, comprenant une étape (E10), mise en oeuvre avant ladite étape d'exploration (E20), d'obtention de l'historique initial (H⁰) par la sélection aléatoire d'au moins une configuration du système LiDAR (LiD), et d'obtention de ladite au moins une performance réelle associée à cette au moins une configuration.

11. Procédé selon l'une quelconque des revendications 1 à 10, dans lequel :
- l'historique initial (H⁰) comprend au moins une configuration (CLₙ) du système LiDAR (LiD) et sa performance réelle associée (VTₙ),
et comprenant
- une étape (E11), mise en oeuvre avant ladite étape d'exploration (E20), de mise à jour, en premier lieu, de la fonction de prédiction initiale (NN⁰) à partir de l'historique initial (H⁰).

12. Procédé selon l'une quelconque des revendications 1 à 11, dans lequel la sous-étape (a) de sélection (E20A) de ladite nouvelle configuration (CL^{t}) est suivie par :
- la fin de l'itération actuelle (I^{t}) de l'étape d'exploration (E20) si et seulement si ladite nouvelle configuration (CL^{t}) est incluse dans l'historique initial (H^{t-1}) ;
- la fin de l'étape d'exploration (E20) si ledit critère d'arrêt est satisfait ; ou
- l'itération suivante (I^{t+1}) de l'étape d'exploration (E20) dans le cas contraire.

13. Procédé selon l'une quelconque des revendications 1 à 12, dans lequel :
- ladite tâche spécifique est une détection d'objets en trois dimensions ; et
- l'obtention d'une performance réelle (VTₙ) associée à ladite configuration (CLₙ) comprend les étapes suivantes comprenant le fait de :
(i) détecter des objets en trois dimensions avec le système LiDAR (LiD) configuré selon ladite configuration (CLₙ) ;
(ii) calculer un score de détection à partir d'un résultat de l'étape de détection (i) ;
(iii) calculer la performance réelle (VTₙ) en fonction dudit score de détection.

14. Procédé selon l'une quelconque des revendications 1 à 12, dans lequel :
- ladite tâche spécifique est une localisation d'objets sur une carte ; et
- l'obtention d'une performance réelle (VTₙ) associée à ladite configuration (CLₙ) comprend les étapes suivantes comprenant le fait de :
(i) localiser des objets sur une carte au moyen du système LiDAR (LiD) configuré selon ladite configuration (CLₙ) ;
(ii) calculer un score de localisation à partir du résultat de l'étape de localisation (i) ;
(iii) calculer la performance réelle (VTₙ) en fonction dudit score de localisation.

15. Procédé selon l'une quelconque des revendications 1 à 14, dans lequel l'exécution de la tâche spécifique par le système LiDAR (LiD) est simulée par ordinateur.

16. Procédé selon l'une quelconque des revendications 1 à 15, comprenant une étape de configuration du système LiDAR (LiD) en fonction de la configuration optimale (CLB).

17. Dispositif (DD) permettant de déterminer une configuration optimale (CLB) des faisceaux (b') d'un système LiDAR (LiD) destiné à mettre en oeuvre une tâche spécifique, pour lequel dispositif :
- une performance réelle associée à une configuration des faisceaux correspond à une qualité du résultat d'une exécution de ladite tâche spécifique par ledit système LiDAR (LiD) configuré selon cette configuration ;
- une performance prédite d'une configuration est une prédiction d'une performance réelle associée à cette configuration ;
ledit dispositif comprenant
(i) un module (M20) configuré de manière à mettre en oeuvre une étape d'exploration comprenant au moins une itération (I^{t}) des sous-étapes comprenant le fait de :
(a) sélectionner (E20A) une nouvelle configuration parmi au moins une configuration potentielle (CLPₖ^{t}) du système LiDAR (LiD), ladite sélection étant mise en oeuvre selon une stratégie d'exploration pour laquelle une configuration, dont la performance prédite (VP^{t}) est la meilleure parmi ladite au moins une configuration potentielle, a une plus grande chance d'être sélectionnée, la performance prédite d'une configuration étant attribuée par une fonction de prédiction initiale, ladite fonction de prédiction initiale étant un modèle d'apprentissage automatique ;
(b) obtenir (E20B) une performance réelle (VT^{t}) associée à ladite nouvelle configuration (CL^{t}) ;
(c) obtenir (E20C) un nouvel historique (H^{t}) en ajoutant ladite nouvelle configuration (CL^{t}) et sa performance réelle (VT^{t}) associée à un historique initial (H^{t-1}) ;
(d) obtenir (E20D) une nouvelle fonction de prédiction (NN^{t+1}) en modifiant ladite fonction de prédiction initiale (NN^{t}) de telle sorte qu'elle attribue, à au moins une configuration (CLₙ) incluse dans le nouvel historique (H^{t}), au moins une performance prédite (VPₙ^{t}) qui est aussi proche que possible de ladite au moins une performance réelle associée (VTₙ) ;
ledit nouvel historique (H^{t}) et ladite nouvelle fonction de prédiction (NN^{t+1}) constituant respectivement ledit historique initial (H^{t-1}) et ladite fonction de prédiction initiale (N^{t}), pour une itération suivante de l'étape d'exploration (E20), jusqu'à ce qu'un critère d'arrêt de l'étape d'exploration (E20) soit satisfait ; et
(ii) un module pour déterminer (E30) ladite configuration optimale (CLB) comme étant la configuration (CLₙ) ayant la meilleure performance réelle associée (VTₙ), parmi le nouvel historique (H^{t}).

18. Programme informatique (PGI) comprenant des instructions pour mettre en oeuvre, lorsqu'elles sont exécutées sur un ordinateur, toutes les étapes du procédé selon au moins l'une des revendications 1 à 16.

19. Support de stockage (DD2), lisible par un équipement informatique (EI), d'un programme informatique (PGI) comprenant des instructions pour mettre en oeuvre, par le biais dudit équipement informatique, toutes les étapes du procédé selon au moins l'une des revendications 1 à 16.
